Europäisches Patentamt

European Patent Office

Office européen des brevets

(19)

(11) Numéro de publication: **0 084 196**
A2

## (12) DEMANDE DE BREVET EUROPEEN

(21) Numéro de dépôt: 82201651.5

(22) Date de dépôt: 23.12.82

(51) Int. Cl.³: **C 05 B 3/00**
C 05 D 3/02, C 05 D 5/00

(30) Priorité: 30.12.81 BE 206967

(43) Date de publication de la demande:
27.07.83 Bulletin 83/30

(84) Etats contractants désignés:
BE CH DE FR GB LI LU NL

(71) Demandeur: ENGRAIS ROSIER

B-7592 Moustier Hainaut(BE)

(72) Inventeur: Rosier, Jacques
Route de Frasnes, 2
B-7592 Moustier-Hainaut(BE)

(74) Mandataire: Schmitz, Yvon et al,
Bureau Gevers S.A. 7, rue de Livourne Bte 1
B-1050 Bruxelles(BE)

(54) Engrais en suspension et leur préparation.

(57) Engrais en suspension, comprenant un mélange constitué au moins d'un composé choisi dans le groupe comprenant le phosphate bicalcique, le carbonate de calcium, le
carbonate de magnésium et les mélanges d'au moins deux
de ces composés, et d'eau.

EP 0 084 196 A2

"Engrais en suspension et leur préparation"

La présente invention est relative à des engrais phosphatés ou carbonatés simples ou complexes en suspension aqueuse, ainsi qu'à leur préparation.

Il existe essentiellement deux procédés différents de fabrication d'engrais en suspension, l'un se faisant au départ de matières semi-finies liquides, l'autre au départ d'eau et de matières semi-finies solides.

Le premier consiste à mettre du chlorure de potasse ou du sulfate de potasse en suspension dans un polyphosphate d'ammoniaque ou un orthophosphate d'ammoniaque liquide avec un ajout d'argile colloïdale, l'ensemble étant brassé pendant une période de temps variable selon la formulation et, en particulier, selon la quantité de potasse utilisée. On peut également selon la formulation désirée et en particulier suivant le titre de la formule en azote ajouter une solution azotée à base d'urée et de nitrate d'ammonium.

Le second procédé consiste à broyer finement en milieu aqueux un phosphate mono- ou biammonique solide et à ajouter à cette solution du chlorure ou du sulfate de potasse maintenu en suspension par l'addition d'une argile colloïdale, l'ensemble du mélange étant brassé pendant une période de temps variable suivant la formulation et, en particulier, suivant la quantité de potasse utilisée. On peut également selon la formulation désirée et en particulier le titre de la formule en azote ajouter une solution azotée à base d'urée et de nitrate.

L'un et l'autre de ces procédés ont en commun que les engrais en suspension qu'ils produisent contiennent obligatoirement de l'azote provenant soit du polyphosphate d'ammoniaque ou de l'orthophosphate d'ammoniaque liquide soit de phosphate mono et/ou biammonique.

Or l'azote est l'un des éléments fertilisants majeurs qui, n'étant pas fixé par les colloïdes du sol, lessive dans le sol à la faveur des pluies. Par conséquent, l'azote et les engrais contenant de l'azote sont en général épandus au printemps au démarrage ou au redémarrage de la végétation pour être disponibles pour le système radiculaire des plantes.

De ce fait, les engrais épandus avant l'hiver sont principalement des engrais phosphatés et potassiques simples ou phosphopotassiques car l'acide phosphorique et la potasse ne lessivent pas dans le sol. On notera, toutefois, que certains agriculteurs épandent des engrais contenant un peu d'azote sur les semis d'automne pour aider au démarrage de la végétation des céréales d'hiver. Ces quantités d'engrais restent cependant limitées.

Par conséquent, l'utilisation des engrais en suspension existants est limitée à l'automne en raison de leur teneur en azote.

Différents essais ont été réalisés pour tenter de fabriquer des engrais phosphopotassiques en suspension par l'utilisation soit de superphosphate de chaux simple ou triple soit de phosphate de calcium brut.

Dans le premier cas, le produit obtenu a une forte acidité qui entraîne des réactions secondaires au cours du stockage.

Dans le second cas, l'utilisation du phosphate brut, outre le fait qu'elle nécessite un broyage à 63 microns pour être conforme à la législation européenne en matière d'engrais, présente le grave inconvénient de donner un produit dont le phosphore se trouve sous forme tricalcique insoluble dans l'eau et aux différents citrates, et, par conséquent, d'une valeur agronomique faible.

De plus, le stockage de la majorité des engrais en suspension nécessite des réservoirs munis d'un système d'agitation mécanique ou à air comprimé pour en assurer la bonne conservation. Cette exigence et le coût d'investissement ainsi que le soin permanent qu'elle entraîne sont des facteurs supplémentaires qui limitent le développement de l'utilisation des engrais en suspension.

D'autre part, la plupart des engrais actuellement sur le marché ont un pH acide ou, au mieux, neutre . Or, on sait que la valeur du pH est déterminante dans le rendement agricole et de nombreux éléments dégradent ce pH, notamment les pluies, les engrais chimiques acides, les engrais verts, les épandages de fumier, de lisier , etc. Pour pallier à ces inconvénients et corriger le pH, il est donc nécessaire de procéder à des " chaulages", c'est-à-dire essentiellement à l'épandage de carbonates de calcium, de calcium et de magnésium, etc., qui sont généralement épandus sous forme pulvérulente.

4

L'épandage de ces produits se fait en général tous les trois ans en quantités variables de 1000 T à 3000 T par hectare.

L'épandage de ces produits pulvérulents représente non seulement un caractère insalubre pour celui qui l'effectue mais nécessite également l'utilisation d'un matériel adéquat, souvent encombrant et onéreux. De plus, la pulvérulence de ces produits ne permet pas d'obtenir un épandage régulier et de travailler sous des conditions climatiques défavorables, telles que par grand vent ou vent moyen.

Un des buts essentiels de la présente invention consiste à remédier aux inconvénients précités, et à prévoir soit des engrais phosphatés en suspension aqueuse, qui, en raison du fait qu'ils ne contiennent pas nécessairement de l'azote, peuvent être utilisés tout au long de l'année, ces engrais présentent également l'avantage d'apporter un acide phosphorique très soluble en tout ou en partie, et de ne requérir aucun système spécial d'agitation lors de leur stockage, soit des engrais carbonatés en suspension aqueuse, qui en raison de leur efficacité sur le redressement du pH des sols, présentent l'avantage de ne nécessiter aucun épandage de produits pulvérulents sur ceux-ci.

L'invention concerne aussi bien les suspensions d'engrais phosphatés simples (P) que les suspensions d'engrais phosphatés composés ou complexes, c'est-à-dire les suspensions d'engrais binaires associant l'acide phosphorique et la potasse, ou phosphopotassiques (PK), et les suspensions d'engrais ternaires (NPK). On entendra donc dans le cadre de la présente invention par l'expression "engrais phosphatés" les engrais phosphatés simples, phosphopotassiques et ternaires.

De même, suivant la présente invention, l'expression "engrais carbonatés" englobe les suspensions calcaires, les engrais carbonatés simples (N, P ou K), les engrais carbonatés binaires (PK, NP et NK) et les engrais carbonatés ternaires (NPK).

A cet effet, suivant l'invention, l'engrais en suspension aqueuse, comprend un mélange constitué au moins d'un composé choisi dans le groupe comprenant le phosphate bicalcique, le carbonate de calcium, le carbonate de magnésium et les mélanges d'au moins deux de ces composés, et d'eau.

Suivant une forme de réalisation avantageuse de l'invention, le mélange susdit comprend du phosphate de calcium.

Suivant une forme de réalisation particulièrement avantageuse de l'invention, le mélange précité comprend de l'argile colloïdale et un lignosulfonate choisi dans le groupe formé par les lignosulfonates alcalins et alcalino-terreux.

Suivant une autre forme de réalisation particulièrement avantageuse de l'invention, le mélange précité comprend un ou plusieurs éléments choisis dans le groupe comprenant les chlorure et sulfate de potasse, le patentkali, le chlorure de magnésium, le soufre, les nitrates de calcium et de magnésium, et des oligo-éléments, tels que le cuivre, le zinc, le molybdène, le manganèse, le fer, le bore et le cobalt.

La présente invention concerne également un procédé de fabrication de ces engrais, qui consiste en l'addition de phosphate bicalcique et/ou de carbonate de calcium et/ou de carbonate de magnésium, et d'autres constituants éventuels à l'eau, et à broyer le mélange aqueux ainsi obtenu jusqu'à l'obtention d'une suspension aqueuse uniforme.

D'autres détails et particularités de l'invention ressortiront de la description donnée ci-après, à titre d'exemple non limitatif, d'engrais phosphatés suivant l'invention, ainsi que d'un procédé de préparation de ces engrais.

Les engrais phosphatés de l'invention sont obtenus en mettant en suspension dans de l'eau du phosphate bicalcique sec, tel qu'on le trouve dans le commerce, c'est-à-dire avec une humidité d'environ 1%, ou humide, c'est-à-dire avant d'être séché par le fabricant, ce phosphate bicalcique pouvant être additionné de phosphate de calcium brut de manière à ce que le phosphate contenu ait la concentration et la solubilité désirées.

Le phosphate bicalcique seul ou en mélange avec du phosphate de calcium brut peut être additionné d'un certain nombre d'éléments, tels qu'un lignosulfonate alcalin ou alcalino-terreux, de l'argile colloïdale, les chlorure et sulfate de potasse, le chlorure de magnésium, la dolomie, la chaux magnésienne, le patentkali, du soufre sous quelque forme que ce soit, ainsi que des oligo-éléments, tels que le cuivre, le zinc, le molybdène, le manganèse, le fer, le bore et le cobalt. Ces oligo-éléments peuvent également être présents sous n'importe quelle forme appropriée.

Les quantités en poids de phosphate bicalcique et de l'eau sont respectivement de l'ordre de 25 à 60% en poids et de 15 à 50% en poids par rapport au poids du méange des différents constituants de l'engrais, des quantités en poids de phosphate bicalcique et d'eau respectivement de l'ordre de 30 à 55% et de 20 à 45% en poids convenant particulièrement bien.

Il est préférable que l'ensemble des constituants autres que le phosphate bicalcique et l'eau ne dépasse pas 50% en poids du mélange total.

Les engrais carbonatés de l'invention sont, quant à eux, obtenus en mettant en suspension dans de l'eau du carbonate de calcium, du carbonate de magnésium ou un mélange de carbonate de calcium et de carbonate de magnésium, ces carbonates pouvant être utilisés sous n'importe quelle forme (crue ou cuite) et être de n'importe quelle origine. C'est ainsi que l'on peut utiliser des déchets de sciage de marbre à titre de carbonate de calcium et de la dolomie comme mélange de carbonate de calcium et de carbonate de magnésium.

Ces carbonates peuvent être additionnés de phosphate bicalcique et de phosphate de calcium, ce dernier composé étant ajouté, comme dans le cas des engrais phosphatés, pour que le phosphate contenu ait la concentration et la solubilité désirées.

Le carbonate ou le mélange de carbonates, seul ou en mélange avec du phosphate bicalcique et éventuellement du phosphate de calcium peut également, tout comme les engrais phosphatés de l'invention, être additionné d'un certain nombre d'éléments, tels qu'un lignosulfonate alcalin ou alcalino-terreux, de l'argile colloïdale, les chlorure et sulfate de potasse, le chlorure de magnésium, le patentkali, du soufre sous quelque forme que ce soit, ainsi que des oligo-éléments, tels que le cuivre, le zinc, le molybdène, le manganèse, le fer, le bore et le cobalt. Ces oligo-éléments peuvent également être présents sous n'importe quelle forme appropriée.

Les quantités en poids de carbonate et de l'eau sont respectivement de l'ordre de 12 à 65% en poids et de 15 à 50% en poids par rapport au poids du mélange des différents constituants de l'engrais, des quantités en poids de carbonate et d'eau respectivement de l'ordre de 15 à 50% et de 20 à 45% en poids convenant particulièrement bien.

Il est préférable que l'ensemble des constituants autres que le carbonate et l'eau ne dépasse pas 50% en poids du mélange total.

Le lignosulfonate alcalin ou alcalino-terreux, que l'on utilise pour améliorer la dispersion des constituants dans l'eau et contrôler la prise d'eau de l'argile colloïdale, est de préférence choisi dans le groupe formé par le lignosulfonate de calcium, le lignosulfonate de sodium, le lignosulfonate de magnésium et le mélange de ces différents composés. A cet effet, le lignosulfonate de calcium convient particulièrement bien.

L'argile colloïdale, quant à elle, règle la viscosité du mélange et son pouvoir séquestrant.

Pour la préparation des engrais phosphatés suivant l'invention, le phosphate bicalcique seul ou en mélange avec du phosphate de calcium brut et un apport d'éléments choisis en fonction du type d'engrais phosphatés que l'on souhaite obtenir, et d'oligo-éléments, est broyé en milieu aqueux jusqu'à l'obtention d'une suspension uniforme.

L'opération de mise en suspension, qui est effectuée d'une manière connue en soi suivant le procédé du deuxième type décrit dans le préambule, peut s'effectuer dans une installation ordinaire pourvue de dispositifs tels que : cuve de mélange, pompes de circulation, agitateur, hydrocyclone, broyeur humide, etc.

Ainsi qu'on l'a déjà précisé précédemment, si l'on souhaite obtenir des engrais binaires du type phosphopotassique, il suffira, par exemple, d'adjoindre au mélange formé d'eau, de phosphate bicalcique, de lignosulfonate de calcium et d'argile colloïdale, du chlorure de potasse et/ou du sulfate de potasse, ou encore du patentkali. Si l'on désire obtenir des engrais phosphatés ternaires, il suffira d'ajouter à la formulation d'engrais phosphopotassique précitée, un ou plusieurs éléments choisis dans le groupe formé par le phospate d'ammonium, l'urée et les nitrates et sulfate d'ammonium, les solutions azotées à base d'urée et de nitrate et de sulfate d'ammonium convenant particulièrement bien à cet effet.

De même, pour la préparation des engrais carbonatés suivant l'invention, le carbonate ou le mélange de carbonates,, seul ou en mélange avec du phosphate bicalcique, éventuellement du phosphate de calcium et un apport d'éléments choisis en fonction du type d'engrais carbonatés que l'on souhaite obtenir, et d'oligo-éléments, est broyé en milieu aqueux jusqu'à l'obtention d'une suspension uniforme, l'opération de mise en suspension s'effectuant de la même façon que pour les engrais phosphatés.

Si l'on désire obtenir des engrais carbonatés simples du type phosphaté (P), azoté (N) ou potassique (K), on ajoutera, par exemple, au mélange formé d'eau et d'un mélange de carbonates de calcium et de magnésium, soit du phosphate bicalcique, du lignosulfonate de calcium et de l'argile colloïdale, soit une solution azotée et de l'argile colloïdale, soit du chlorure de potasse, du lignosulfonate de calcium et de l'argile colloïdale. Si l'on désire obtenir des engrais binaires, par exemple, du type phosphopotassique (PK) ou du type azoté et phosphorique (NP), il suffira d'ajouter au mélange formé d'eau, de carbonates de calcium et de magnésium, de phosphate bicalcique, de lignosulfonate de calcium et d'argile colloïdale, soit du chlorure de potasse et/ou du sulfate de potasse, ou encore du patentkali, soit du phosphate d'ammonium, de l'urée, du nitrate ou du sulfate d'ammonium. Enfin, si l'on désire obtenir des engrais carbonatés ternaires (NPK), il suffira d'ajouter à la formulation d'engrais carbonatés du type phosphopotassique précitée (PK), comme dans le cas des engrais phosphatés, un ou plusieurs éléments choisis dans le groupe formé par le phosphate d'ammonium, l'urée et les nitrate et sulfate d'ammonium.

L'invention sera illustrée plus en détail par les exemples concrets de formulation d'engrais phosphatés simples (P) , phosphopotassiques (PK) et ternaire (NPK), ainsi que par les exemples concrets de formulation d'engrais carbonatés simples (N, P ou K), binaires (NP et PK) et ternaire (NPK) et de suspension calcaire suivants.

Exemple 1 : N-P-K = 0-22-0 /100 Kg

| | |
|---|---|
| Eau | 43,7% |
| Lignosulfonate de Ca | 2,5% |
| Phosphate bicalcique (sec) 42% de $P_2O_5$ | 52,5% |
| Argile en suspension | 1,3% |

Exemple 2: N-P-K = 0-12-18 / 100 Kg

| | |
|---|---|
| Eau | 27,5% |
| Lignosulfonate de Ca | 1% |
| Phosphate bicalcique (humide) 30% de $P_2O_5$ | 40% |
| KCl 60 | 30% |
| Argile en suspension | 1,5% |

Exemple 3 : N-P-K = 0-10-16 + 3 MgO + $B_2O_3$ /100 Kg

| | |
|---|---|
| Eau | 21,65% |
| Lignosulfonate de Ca | 1% |
| Phosphate bicalcique (humide) 30% de $P_2O_5$ | 33,4% |
| KCl 60 | 26,7% |
| Mg $Cl_2$ | 15% |

Exemple 3 (suite)

Solubor (66,2% de $B_2O_3$ sous 0,75%
forme de poudre mouillable;
dérivé neutre de borate)

Argile de suspension     1,5%

Exemple 4:   N-P-K = 4-10-18 /100 Kg

Eau        21,8%

Solution azotée urée-
nitrate à 30% de N     13,3%

Lignosulfonate de Ca     1%

Phosphate bicalcique
(humide) 30% de $P_2O_5$     33,4%

KCl 60     30%

Argile de suspension     1,5%

Exemple 5:   O-P-O + $CaCO_3$   $MgCO_3$
0-15-0 + 3 MgO/100 Kg

Eau     54,2%

Lignosulfonate de Ca     2,5%

Phosphate bicalcique
(sec) 42% de $P_2O_5$ soluble
dans eau + citrate     35,7%

Mélange $CaCO_3$/$MgCO_3$ (55/43)
    15%

Argile de suspension     1,6%

Exemple 6:   N-P-O + $CaCO_3$   $MgCO_3$
12-10-0 + 3 MgO /100 Kg

Eau     17,7%

Solution azotée urée-nitrate
à 30% de N     40%

Lignosulfonate de Ca     1,5%

Phosphate bicalcique     23,8%

Exemple 6 (suite)

(sec) 42% de $P_2O_5$ soluble dans eau
+ citrate

$CaCO_3$ $MgCO_3$ (55/43)          15%

Argile de suspension          2%

Exemple 7 :   O-P-K + $CaCO_3$  $MgCO_3$

0-7-11 + 5MgO /100 Kg

Eau                          36,6%

Lignosulfonate de Ca          1,5%

Phosphate bicalcique         16,7%

(sec) 42% de $P_2O_5$ soluble
dans eau + citrate

KCl 60                       18,4%

$CaCO_3$ $MgCO_3$ (55/43)          25%

Argile de suspension          1,8%

Exemple 8 :   N-P-K + $CaCO_3$  $MgCO_3$

7-6-12 + 3 MgO /100 Kg

Eau                          22,9%

Solution azotée urée-
nitrate à 30% de N           23,4%

Lignosulfonate de Ca          1,0%

Phosphate bicalcique         15,7%

(sec) 42% de $P_2O_5$ soluble
dans eau + citrate

KCl 60                        20%

$CaCO_3$ $MgCO_3$ (55/43)          15%

Argile de suspension          2%

Exemple 9 :   N-O-O + CaCO$_3$ MgCO$_3$

15-O-O + 48% CaCO$_3$ MgCO$_3$ (55/43)/100 Kg

(9,9 MgO)

| | |
|---|---|
| Solution azotée urée-nitrate à 30% de N | 50% |
| Argile de suspension . | 2% |
| CaCO$_3$ MgCO$_3$ (55/43) | 48% |

Exemple 10 :   O-O-K + CaCO$_3$ MgCO$_3$

O-O-15 + 40% CaCO$_3$ MgCO$_3$ /100 Kg

| | |
|---|---|
| Eau | 32% |
| Lignosulfonate Ca | 1,5% |
| CaCO$_3$ MgCO$_3$ (55/43) | 40% |
| KCl 60 | 25% |
| Argile de suspension | 1,5% |

Exemple 11 :

   Suspension calcaire.

O-O-O + 60% CaCO$_3$ MgCO$_3$ (55/43)

valeur neutralisante = 36/100 Kg

| | |
|---|---|
| Eau | 36,8% |
| Argile de suspension | 1,7% |
| Lignosulfonate de Ca | 1,5% |
| CaCO$_3$ MgCO$_3$ (55/43) | 60% |

Les différents constituants, dans chacun des exemples donnés, sont ajoutés à l'eau dans l'ordre indiqué et sont ensuite soumis à un broyage jusqu'à l'obtention d'une suspension aqueuse uniforme. Il est bien entendu que l'on pourrait modifier l'ordre d'addition des différents constituants, et que l'on pourrait également envisager de les ajouter tous en même temps à l'eau.

Il est bien entendu que l'invention n'est pas limitée aux formes de réalisation décrites ci-avant et que bien des variantes peuvent être envisagées sans sortir du cadre du présent brevet.

REVENDICATIONS.

1. Engrais en suspension, caractérisé en ce qu'il comprend un mélange constitué au moins d'un composé choisi dans le groupe comprenant le phosphate bicalcique, le carbonate de calcium, le carbonate de magnésium et les mélanges d'au moins deux de ces composés, et d'eau.

2. Engrais suivant la revendication 1, caractérisé en ce que le mélange susdit comprend du phosphate de calcium.

3. Engrais suivant l'une ou l'autre des revendications 1 et 2, caractérisé en ce que le mélange susdit comprend un lignosulfonate choisi dans le groupe formé par les lignosulfonates alcalins et alcalino-terreux.

4. Engrais suivant la revendication 3, caractérisé en ce que le lignosulfonate est choisi dans le groupe formé par le lignosulfonate de calcium, le lignosulfonate de sodium, le lignosulfonate de magnésium et les mélanges de ces composés.

5. Engrais suivant l'une quelconque des revendications 1 à 4, caractérisé en ce que le mélange précité comprend de l'argile colloïdale.

6. Engrais suivant l'une quelconque des revendications 1 à 5, caractérisé en ce que le mélange susdit comprend un ou plusieurs composés choisis dans le groupe comprenant le chlorure de potasse, le sulfate de potasse, et le patentkali.

7. Engrais suivant l'une quelconque des revendications 1 à 6, caractérisé en ce que le mélange précité comprend un ou plusieurs éléments choisis dans le groupe comprenant le chlorure de magnésium, le soufre, les nitrates de calcium et de magnésium et les oligo-éléments, tels que le cuivre, le zinc, le molybdène, le manganèse, le fer, le bore et le cobalt.

8. Engrais suivant l'une quelconque des revendications 1 à 7, caractérisé en ce que le mélange précité comprend un ou plusieurs composés choisis dans le groupe formé par le phosphate d'ammonium, l'urée, le nitrate d'ammonium et le sulfate d'ammonium.

9. Engrais suivant l'une quelconque des revendications 1 à 8, caractérisé en ce qu'il comprend un mélange constitué au moins de phosphate bicalcique et d'eau et en ce que les quantités en poids de phosphate bicalcique et d'eau sont respectivement de l'ordre de 25 à 60% en poids et de 15 à 50% en poids par rapport au poids du mélange.

10. Engrais suivant la revendication 9, caractérisé en ce que les quantités en poids de phosphate bicalcique et d'eau sont respectivement de l'ordre de 30 à 55% et de 20 à 45% en poids par rapport au poids du mélange.

11. Engrais suivant l'une ou l'autre des revendications 9 et 10, caractérisé en ce que les quantités des constituants autres que le phosphate bicalcique et l'eau ne dépassent pas 50% en poids par rapport au poids du mélange.

12. Engrais suivant l'une quelconque des revendications 1 à 8, caractérisé en ce qu'il comprend un mélange constitué au moins d'un composé choisi parmi le carbonate de calcium, le carbonate de magnésium et leurs mélanges, et d'eau et en ce que les quantités en poids de carbonate et d'eau sont respectivement de l'ordre de 12 à 65% en poids et de 15 à 50% en poids par rapport au poids du mélange.

13. Engrais suivant la revendication 12, caractérisé en ce que les quantités en poids de carbonate et d'eau sont respectivement de l'ordre de 15 à 50% et de 20 à 45% en poids par rapport au poids du mélange.

14. Engrais suivant l'une ou l'autre. des revendications 12 et 13, caractérisé en ce que les quantités des constituants autres que le carbonate et l'eau ne dépassent pas 50% en poids par rapport au poids du mélange.

15. Procédé de préparation de l'engrais phosphaté en suspension suivant l'une quelconque des revendications 9 à 11, caractérisé en ce qu'il consiste à ajouter le phosphate bicalcique et les autres constituants éventuels à l'eau, et à broyer le mélange aqueux ainsi obtenu jusqu'à l'obtention d'une suspension aqueuse uniforme.

16. Procédé de préparation de l'engrais carbonaté en suspension suivant l'une quelconque des revendications 12 à 14, caractérisé en ce qu'il consiste à ajouter le carbonate et les autres constituants éventuels à l'eau, et à broyer le mélange aqueux ainsi obtenu jusqu'à l'obtention d'une suspension aqueuse uniforme.